# EUROPÄISCHE PATENTSCHRIFT

(11) **EP 2 898 364 B1**
(45) Veröffentlichungstag und Bekanntmachung des Hinweises auf die Patenterteilung: **28.11.2018**
(21) Anmeldenummer: 13758774.7
(22) Anmeldetag: 26.08.2013
(51) Int. Cl.: G02B 26/10

(54) **SCANNERVORRICHTUNG ZUM 2-DIMENSIONALEN ABLENKEN EINES LASERSTRAHLS**
SCANNER DEVICE FOR THE 2-DIMENSIONAL DEFLECTION OF A LASER BEAM
DISPOSITIF SCANNER POUR DÉVIER UN FAISCEAU LASER DANS 2 DIMENSIONS

(30) Priorität: 21.09.2012 DE 102012216979
(43) Veröffentlichungstag der Anmeldung: 29.07.2015
(73) Patentinhaber: TRUMPF Laser GmbH, 78713 Schramberg (DE)
(72) Erfinder: HUONKER, Martin, 78661 Dietingen (DE); BRÜSTLE, Reiner, 78730 Lauterbach (DE)
(74) Vertreter: Kohler Schmid Möbus Patentanwälte
(86) Internationale Anmeldenummer: PCT/EP2013/067610
(87) Internationale Veröffentlichungsnummer: WO 2014/044495

(56) Entgegenhaltungen:
- EP-A1- 1 536 267
- WO-A1-2009/018854
- US-A- 4 877 955

## Beschreibung

Die Erfindung betrifft eine Scannervorrichtung zum 2-dimensionalen Ablenken eines Laserstrahls mittels zweier jeweils um eine Achse schwenkbar gelagerter, motorisch angetriebener Spiegel, mit einer den einen, ersten Spiegel samt Antriebsmotor aufweisenden ersten Motor-Spiegel-Einheit und mit einem Träger zur Befestigung der ersten Motor-Spiegel-Einheit. Die Erfindung betrifft ferner einen Satz an Motor-Spiegel-Einheiten für eine erfindungsgemäße Scannervorrichtung. Zur zielgerichteten Manipulation eines Laserstrahls weisen bekannte Scannervorrichtungen typischerweise zwei Spiegel auf, mit denen der eintretende Laserstrahl zunächst durch Schwenken des ersten Spiegels um eine erste Achse und anschließend durch Schwenken des anderen zweiten Spiegels um eine zweite Achse abgelenkt bzw. manipuliert wird. Zum Verschwenken der Spiegel ist jeweils ein Antriebsmotor vorgesehen, der zusammen mit dem Spiegel eine Motor-Spiegel-Einheit bildet. Die durch die Scannervorrichtung beeinflussten Laserstrahlen werden typischerweise vor ihrem Eintritt in die Scannervorrichtung kollimiert und nach ihrem Austritt aus der Scannervorrichtung durch ein an der Scannervorrichtung angeordnetes Scannerobjektiv (z.B. ein F-/Theta-Objektiv) fokussiert.

Die industrielle Lasermaterialbearbeitung erfordert heute typischerweise nicht nur die genaue Ausrichtung bzw. Ablenkung eines in Gestalt und Intensität immer gleichbleibenden Laserstrahls. Stattdessen werden viele unterschiedliche Lasertypen eingesetzt, die hinsichtlich ihrer Strahlparameter variieren. Es werden insbesondere durch eine Kombination unterschiedlicher Kollimations- und Objektivbrennweiten eine Vielzahl von Abbildungsverhältnissen realisiert, die zu unterschiedlichen Strahldurchmessern führen. Um den unterschiedlichen Anforderungen an die Strahldurchmesser gerecht zu werden, sind unterschiedliche Scannervorrichtungen auf dem Markt, die jeweils baulich an die entsprechenden Laserstrahldurchmesser (Aperturen) angepasst sind.

Sollen Laserstrahlen mit kleinen Durchmessern abgelenkt werden, werden bekanntermaßen entsprechend kleine Spiegel genutzt und deren Spiegelachsen in einem kleinen Abstand zueinander angeordnet, wohingegen zur Ablenkung von Laserstrahlen mit größeren Durchmessern vergleichsweise große Spiegel genutzt und deren Spiegelachsen weiter voneinander entfernt angeordnet werden müssen, damit die großen Spiegel beim Verschwenken nicht kollidieren. Durch dieses Verändern der Strahlverläufe bzw. der Strahlgeometrien (also durch das unterschiedlich weit voneinander beabstandete Anordnen unterschiedlich großer Spiegel) ist es möglich, von dem Vorteil einer verbesserten Dynamik kleiner Ablenkspiegel zu profitieren. Diese sind nämlich bekanntermaßen für eine besonders schnelle und genaue Manipulation besonders geeignet, da sie im Vergleich zu größeren Spiegeln weniger träge sind und somit schneller und präziser um ihre Achsen verschwenkt und positioniert werden können. Der vorbeschriebene relative räumliche (Strahl-)Versatz bzw. die unterschiedliche Anordnung verschiedener Spiegel erfordern eine bauliche Anpassung der Scannervorrichtung.

Hierzu sind bekannte Scannervorrichtungen auf dem Markt, in die für jeden Laserstrahldurchmesser eine (apertur-)spezifische Aufbauplatte eingebracht und montiert wird. An diese unterschiedlichen Aufbauplatten werden, typischerweise vor dem Einbringen der Aufbauplatte in die Scannervorrichtung, in Abhängigkeit des gewünschten Laserstrahldurchmessers entsprechend angepasste Motor-Spiegel-Einheiten direkt befestigt. Die jeweiligen Aufbauplatten sind dabei geometrisch so geformt, dass sich zusammen mit den angebrachten Motor-Spiegel-Einheiten die gewünschte räumliche Anordnung der Spiegel bzw. der Spiegelachsen ergibt, die für die Ablenkung des Laserstrahls mit dem entsprechenden Laserstrahldurchmesser erforderlich ist. Für jeden Laserstrahldurchmesser ist folglich eine andere Aufbauplatte erforderlich. Die bekannten Aufbauplatten sind jedoch vergleichsweise schwere und nur unter relativ hohem Aufwand (zum Beispiel durch Gießverfahren und Präzisionsfräsen) herstellbare Bauteile. Sie müssen ferner zusätzlich zu den unterschiedlichen Motor-Spiegel-Einheiten bereitgehalten werden, was einen weiteren Aufwand darstellt. Das bekannte Auswechseln sowohl der Aufbauplatten als auch der Motor-Spiegel-Einheiten ist folglich sowohl hinsichtlich der erforderlichen Bauteile als auch hinsichtlich der Handhabung ein teures und aufwändiges System. Solche Scannervorrichtungen werden z.B. in der WO 2009/018854 beschrieben.

Der vorliegenden Erfindung liegt die Aufgabe zugrunde, eine eingangs genannte Scannervorrichtung anzugeben, die die Nachteile des Standes der Technik überwindet oder zumindest abmildert.

Diese Aufgabe wird durch eine Scannervorrichtung der eingangs genannten Art gelöst, die gekennzeichnet ist durch mindestens zwei jeweils einen Montageflansch aufweisende erste Motor-Spiegel-Einheiten, die jeweils identische Anlageflächen aufweisen und sich bezüglich der Spiegelgröße und/oder Spiegelposition voneinander unterscheiden und die wahlweise mit den Anlageflächen an der gleichen ersten Montagefläche des Trägers lösbar befestigbar sind. Durch das wahlweise Befestigen unterschiedlicher erster Motor-Spiegel-Einheiten mittels eines Montageflansches kann die Scannervorrichtung in vorteilhafter Weise mit ein und demselben (Universal-)Träger Laserstrahlen mit unterschiedlichen Strahldurchmessern ablenken, da die unterschiedlichen räumlichen Lagen der Spiegelachsen bzw. die unterschiedlichen Spiegelpositionen (auch: unterschiedliche Spiegelgrößen) an die durch die unterschiedlichen Stahldurchmesser veränderte Strahlgeometrie angepasst ist. Zum Beispiel ergibt sich durch eine erste Motor-Spiegel-Einheit in Verbindung mit ihrem Montageflansch eine räumliche Ausrichtung der Achse des ersten Spiegels, die für die Ablenkung eines Laserstrahls mit einem kleinen Strahldurchmesser geeignet ist, wohingegen sich durch eine andere erste Motor-Spiegel-Einheit in Verbindung mit ihrem Montageflansch eine andere räumliche Ausrichtung der Achse des ersten Spiegels ergibt, die für die Ablenkung eines Laserstrahls mit einem anderen größeren Strahldurchmesser geeignet ist.

Erfindungsgemäß ist nur ein einziger Träger (Universalträger) für alle unterschiedlichen Strahldurchmesser erforderlich, wodurch nicht mehrere aperturspezifische Aufbauplatten gewechselt werden müssen. Der Träger kann somit baulich in die erfindungsgemäße (Universal-)Scannervorrichtung integriert werden, woraus eine Kosten-Ersparnis bei der Herstellung der Scannervorrichtung und ein verringerter Aufwand bei der Handhabung des Trägers bzw. der Scannervorrichtung resultiert. Die erfindungsgemäße Scannervorrichtung bildet ein modulares (Universal-) System bzw. eine modulare Anordnung, das bzw. die auf die Ablenkung von Laserstrahlen mit unterschiedlichen Strahldurchmessern angepasst ist. Dabei ist der erfindungsgemäße Träger hinsichtlich der Größe, der geometrischen Form bzw. Gestalt an die Erfordernisse vom kleinsten bis zum größten, durch die Scannervorrichtung abzudeckenden Strahldurchmesser angepasst.

Die Achse einer ersten Motor-Spiegel-Einheit ist in Verbindung mit ihrem einen Montageflansch in einer räumlichen Lage relativ zur Anlagefläche dieses einen Montageflansches positioniert, die sich von der räumlichen Lage unterscheidet, die die Achse einer anderen ersten Motor-Spiegel-Einheit in Verbindung mit ihrem anderen Montageflansch relativ zur Anlagefläche dieses anderen Montageflansches einnimmt. Dadurch, dass diese Montageflansche jeweils identische Anlageflächen aufweisen unterscheiden sich jedoch die räumlichen Lagen der jeweiligen Achsen bzw. die jeweiligen räumlichen Spiegelpositionen voneinander. Die Montageflansche sind ferner über die Anlageflächen an der Montagefläche des Trägers lösbar befestigbar, wobei die Anlageflächen an den Montageflanschen ausgebildet sind. Die Montageflansche dienen gewissermaßen als Adapter zwischen den Spiegeln samt Antriebsmotoren einerseits und dem Träger andererseits. Bei Scannervorrichtungen mit zwei Spiegeln sind die Spiegelachsen, um die die Spiegel jeweils schwenkbar gelagert sind, in der Regel windschief zueinander angeordnet. Es versteht sich, dass nicht nur zwei unterschiedliche Montageflansche sondern auch drei oder mehr unterschiedliche Montageflansche der Motor-Spiegel-Einheiten vorgesehen sein können, je nachdem wie viele unterschiedliche Strahldurchmesser durch die eine Scannervorrichtung wahlweise abgelenkt werden sollen.

Bei einer bevorzugten Ausführungsform der Erfindung weist eine den anderen, zweiten Spiegel samt Antriebsmotor aufweisende zweite Motor-Spiegel-Einheit zur Befestigung am Träger einen Montageflansch auf, der mit einer Anlagefläche an einer zweiten Montagefläche des Trägers lösbar befestigbar ist. Eine bevorzugte Weiterbildung dieser Ausführungsform ist gekennzeichnet durch mindestens zwei jeweils einen Montageflansch aufweisende zweite Motor-Spiegel-Einheiten, die jeweils identische Anlageflächen aufweisen und sich bezüglich der Spiegelgröße und/oder Spiegelposition voneinander unterscheiden und die wahlweise an der gleichen zweiten Montagefläche des Trägers lösbar befestigbar sind. Somit können in vorteilhafter Weise zweite Motor-Spiegel-Einheiten mit wahlweise jeweils einem einen oder einem anderen Montageflansch an dem Träger befestigt werden, wodurch sich die Gestaltungsfreiheit zur Realisierung unterschiedlicher Strahlgeometrien (bzw. Strahlverläufe oder Strahlversätze) für unterschiedliche Strahldurchmesser in der Scannervorrichtung weiter erhöht. Dann ist nicht nur der erste Spiegel der Scannervorrichtung durch wahlweises Befestigen unterschiedlicher erster Spiegel-Motor-Montageflansch-Kombinationen (Motor-Spiegel-Einheiten) in seiner räumlichen Orientierung variabel anordnenbar, sondern darüber hinaus auch der zweite Spiegel über die zweiten Motor-Spiegel-Einheiten.

Bei einer weiteren bevorzugten Ausführungsform weist der Träger eine Wand mit einer Aufnahmeöffnung zum zumindest teilweisen Eingreifen der Motor-Spiegel-Einheiten in den Träger auf. Die Aufnahmeöffnungen umschließen die Motor-Spiegel-Einheiten in der an dem Träger befestigten Position zumindest teilweise und schützen diese somit. Die Aufnahmeöffnungen erleichtern ferner das Positionieren bzw. Einführen der Motor-Spiegel-Einheiten in die Aufnahmeöffnungen und geben für den Fall, dass der Träger als ein Träger mit einem Innenraum ausgebildet ist, in einfacher Art und Weise den Zugang zu diesem Innenraum für den Montagevorgang der Motor-Spiegel-Einheiten frei.

Bei einer bevorzugten Weiterbildung der vorhergehenden Ausführungsform ist der Konturverlauf der Aufnahmeöffnung an die unterschiedlichen Spiegelgrößen und/oder unterschiedlichen Spiegelpositionen von mehreren wahlweise anordnenbaren Motor-Spiegel-Einheiten angepasst. Der Konturverlauf der Aufnahmeöffnungen (bzw. der Öffnungsquerschnitt der Aufnahmeöffnungen) ist somit vorteilhaft an den Versatz unterschiedlicher Spiegelachsen bzw. Spiegelpositionen angepasst, der sich durch das wahlweise Befestigen der unterschiedlichen Motor-Spiegel-Einheiten mit unterschiedlichen Montageflanschen an dem Träger einstellt. Die Größe der Aufnahmeöffnungen entspricht dabei mindestens der radialen Erstreckung derjenigen eingreifenden bzw. montierten Motor-Spiegel-Einheit (insbesondere mindestens deren Motoraußendurchmessern), die zur Ablenkung des Laserstrahls mit dem größten Strahldurchmesser ausgelegt ist.

Bei einer anderen bevorzugten Ausführungsform weist der Träger eine Eintrittsöffnung für den Eingangslaserstrahl auf, deren Öffnungsquerschnitt an die unterschiedlichen Spiegelgrößen und/oder unterschiedlichen Spiegelpositionen von mehreren wahlweise anordnenbaren Motor-Spiegel-Einheiten angepasst ist. Durch diese Anpassung ist es in vorteilhafter Weise möglich, Laserstrahlen mit unterschiedlichen Durchmessern abzulenken, ohne dass diese Laserstrahlen auch nur teilweise auf den Träger (bzw. auf eine Wand des Trägers) auftreffen und an der weiteren Ausbreitung im Inneren der Scannervorrichtung gehindert werden. Ferner ist durch diese Anpassung die Eintrittsöffnung lediglich auf die Bereiche des Trägers begrenzt, durch die die unterschiedlichen Laserstrahlen aufgrund der unterschiedlichen Strahlgeometrien für unterschiedliche Strahldurchmesser eintreten. Die Anpassung des Öffnungsquerschnitts der Eintrittsöffnung an die unterschiedlichen Spiegelgrößen und/oder Spiegelpositionen (bzw. an die unterschiedlichen relativen räumlichen Lagen der Spiegelachsen) kann beispielsweise dadurch erreicht werden, dass der Eintrittsöffnungsquerschnitt zumindest näherungsweise einem Querschnitt der Umhüllenden aller wahlweise mit unterschiedlichen Strahldurchmessern eintretenden Laserstrahlen entspricht. Die Eintrittsöffnung ist beispielsweise an einer Trägerwand des Trägers gebildet.

Bei einer anderen bevorzugten Weiterbildung sind die Aufnahmeöffnung und/oder die Eintrittsöffnung jeweils als Langloch ausgebildet. Ein Langloch bzw. eine Langlochöffnung stellt eine besonders einfach zu erzeugende Eintritts- bzw. Aufnahmeöffnung dar, durch die die Herstellungskosten des Trägers und somit der Scannervorrichtung reduziert werden können.

Bevorzugt ist ferner eine Ausführungsform, bei der der Träger, insbesondere die Eintrittsöffnung, mit unterschiedlichen Lochplatten zumindest teilweise abdeckbar ist, deren Lochöffnungen sich im Durchmesser und/oder in der relativen Position unterscheiden. Durch die Lochplatten mit jeweils an die entsprechenden Laserstrahldurchmesser angepassten Lochöffnungsdurchmessern und Lochöffnungspositionen kann der Laserstrahleintritt in die Scannervorrichtung bzw. in den Träger vorteilhaft vergleichsweise dicht gestaltet werden. Die freie Verbindung zwischen einem Außenbereich der Scannervorrichtung und einem Innenbereich (einem Innenraum) der Scannervorrichtung ist dann insgesamt bei an den Träger angebrachter Lochplatte lediglich auf den Durchmesser der jeweiligen Lochöffnung begrenzt, und Staub oder sonstige Partikel können nicht in unkontrollierten Mengen (insbesondere während des Laserbetriebs) in den Innenbereich eintreten. Die unterschiedlichen Lochplatten sind an dem Träger, insbesondere an einer Trägerwand, lösbar befestigbar.

Bevorzugt bildet des Weiteren der Träger zumindest teilweise ein Gehäuse der Scannervorrichtung. Dadurch, dass der erfindungsgemäße Träger nicht für jeden unterschiedlichen Laserstrahldurchmesser ausgewechselt werden muss, kann er in vorteilhafter Weise als ein Teil des Scannervorrichtungsgehäuses ausgebildet sein. Es entfallen dann die sonst erforderlichen Befestigungs- und Montageeinrichtungen zur Fixierung des Trägers in dem Scannervorrichtungsgehäuse.

Schließlich ist eine Ausführungsform bevorzugt, bei der an dem Träger unterschiedliche Halteeinrichtungen befestigbar sind, die ein Scannerobjektiv jeweils in einem unterschiedlichen Abstand zu dem Träger, insbesondere zu einem Spiegel der Scannervorrichtung, positionieren. Durch die unterschiedlichen auswechselbaren Halteeinrichtungen kann die Distanz zwischen dem Scannerobjektiv und der Scannervorrichtung variiert bzw. eingestellt werden (zum Beispiel kann die Tiefe, in der das Scannerobjektiv in die Scannervorrichtung, insbesondere in den Träger, eingeschraubt wird, variiert werden). Dies erlaubt in vorteilhafter Weise die Erzielung eines größtmöglichen Scanfeldes bei gegebener Objektivbrennweite durch möglichst nahes Heranrücken des Scannerobjektivs an die Spiegel, insbesondere an den austrittsseitigen Spiegel, der Scannervorrichtung. Das Scannerobjektiv kann beispielsweise ein F-/Theta-Objektiv sein, und die Halteeinrichtungen (die Verbindungselemente) können als Einsätze, insbesondere als Gewindeeinsätze, ausgebildet sein, die in eine Austrittsöffnung des Trägers einsetzbar bzw. einschraubbar sind. Zur Anpassung an das jeweilige Scannerobjektiv weisen diese Einsätze bzw. Gewindeeinsätze ferner an das Scannerobjektiv angepasste Durchmesser zum Durchtritt des jeweiligen Laserstrahls auf.

In den Rahmen der Erfindung fällt auch ein Satz aus einer Mehrzahl an Motor-Spiegel-Einheiten für eine erfindungsgemäße Scannervorrichtung, wobei die Motor-Spiegel-Einheiten jeweils einen Spiegel samt Antriebsmotor und unterschiedliche Montageflansche mit jeweils identischen Anlageflächen aufweisen, wobei sich die einzelnen Motor-Spiegel-Einheiten bezüglich der Spiegelgröße und/oder Spiegelposition voneinander unterscheiden.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung. Die Figuren der Zeichnung zeigen den erfindungsgemäßen Gegenstand stark schematisiert und sind nicht maßstäblich zu verstehen.

Es zeigen:
- Fign. 1a,1b: eine erfindungsgemäße Scannervorrichtung, durch die wahlweise ein Laserstrahl mit kleinem Strahldurchmesser (Fig. 1a) oder ein Laserstrahl mit größerem Strahldurchmesser (Fig. 1b) abgelenkt wird;
- Fign. 2a,2b: die Scannervorrichtung der Fign. 1a und 1b in einer Unteransicht;
- Fign. 3a,3b: zwei unterschiedliche perspektivische Ansichten eines Trägers der Scannervorrichtung aus den Fign. 1a,1b;
- Fign. 4a,4b: jeweils erste und zweite Motor-Spiegel-Einheiten für die Scannervorrichtung aus den Fign. 1a, 1b, die zur Ablenkung der unterschiedlichen Laserstrahlen unterschiedliche Antriebsmotoren, Spiegel und Montageflansche aufweisen;
- Fig. 5: einen erfindungsgemäßen Satz an ersten Motor-Spiegel-Einheiten,
- Fign. 6a,6b: die Scannervorrichtung der Fign. 1a,1b, wobei eine Eintrittsöffnung des Trägers durch unterschiedliche Lochplatten abgedeckt ist; und
- Fign. 7a,7b: zwei unterschiedliche Gewindeeinsätze, die an dem Träger der Scannervorrichtung befestigt sind, wobei jeweils unterschiedliche Scannerobjektive für unterschiedliche Strahldurchmesser an die Gewindeeinsätze geschraubt sind.

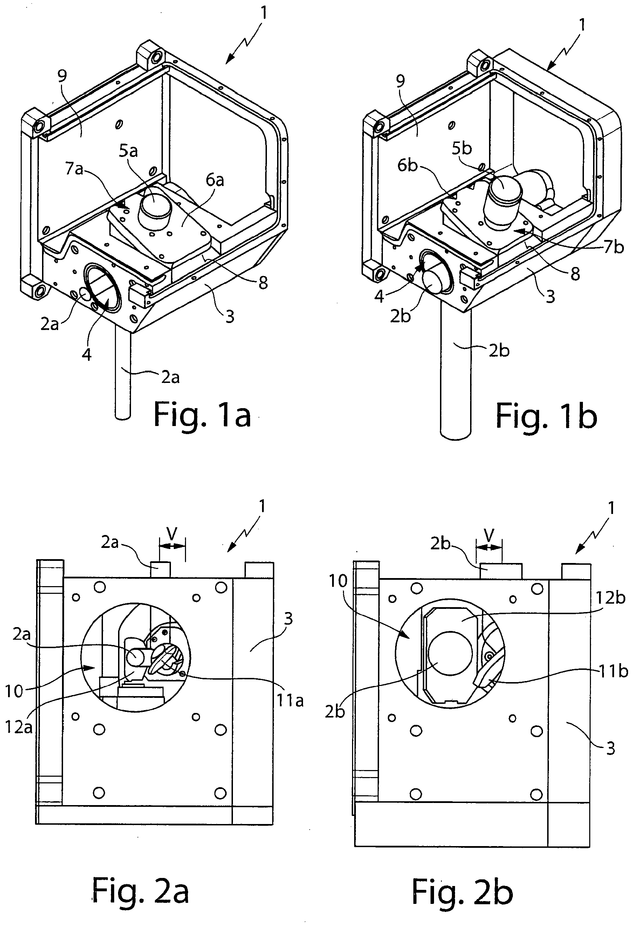

In den **Fign. 1a** und **1b** ist eine Scannervorrichtung **1** zum zweidimensionalen Ablenken von Laserstrahlen **2a, 2b** mit unterschiedlichen Durchmessern dargestellt. Der Laserstrahl 2a, 2b (der Laserstrahl mit kleinem Strahldurchmesser 2a in Fig. 1a und der Laserstrahl mit großem Strahldurchmesser 2b in Fig. 1b) tritt über eine an einem Träger **3** der Scannervorrichtung 1 ausgebildete Eintrittsöffnung **4** in die Scannervorrichtung 1 ein und nach der erfolgten Ablenkung wieder aus ihr aus. Das Ablenken des unterschiedlichen Laserstrahls 2a, 2b erfolgt mittels zweier in den Fign. 1a und 1b verdeckter Spiegel, die in einem Innenraum des Trägers 3 angeordnet und jeweils um eine Achse schwenkbar gelagert und motorisch angetrieben sind.

Ein eintrittsseitiger Spiegel bildet zusammen mit einem eintrittsseitigen Antriebsmotor **5a, 5b** und einem eintrittsseitigen Montageflansch **6a, 6b** eine erste Motor-Spiegel-Einheit **7a, 7b,** wobei die ersten Motor-Spiegel-Einheiten 7a, 7b an dem Träger 3 befestigt sind. In der Fig. 1a weist die erste Motor-Spiegel-Einheit 7a zur Manipulation des Laserstrahls mit kleinem Strahldurchmesser 2a den kleinen (ersten) Antriebsmotor 5a und den dünnen (ersten) Montageflansch 6a auf. In der Fig. 1b weist die erste Motor-Spiegel-Einheit 7b zur Ablenkung des Laserstrahls mit größerem Strahldurchmesser 2b den größeren (zweiten) Antriebsmotor 5b und den dickeren (zweiten) Montageflansch 6b auf. Sowohl die (in den Fign. 1a, 1b nicht dargestellten) Spiegel, als auch die (ersten und zweiten) Antriebsmotoren 5a, 5b unterscheiden sich also von Fig. 1a zu Fig. 1b hinsichtlich ihrer Größe und ihrer räumlicher Position bzw. Anordnung.
Die Montageflansche 6a, 6b unterscheiden sich nicht nur in ihrer Größe (zum Beispiel ist der eine Montageflansch 6a dünner als der andere Montageflansch 6b), sondern an den Montageflanschen ausgebildete Aufnahmen zur lösbaren Befestigung der Antriebsmotoren 5a, 5b sind zum Beispiel unterschiedlich tief, unterschiedlich breit, etc. ausgebildet. Allen Montageflanschen 6a, 6b ist jedoch gemein, dass sie aufgrund ihrer gleichen Außenkontur an einer gleichen ersten Montagefläche **8** des Trägers 3 positionsgleich befestigt sind.

Die Fign. 1a und 1b stellen unterschiedliche Einbausituationen ein und derselben Scannervorrichtung 1 dar, wobei die erste Einbausituation (Fig. 1a) an die Ablenkung des dünnen Laserstrahls 2a und die zweite Einbausituation (Fig. 1b) an die Ablenkung des Laserstrahls mit großem Strahldurchmesser 2b angepasst ist. Zur Ablenkung der unterschiedlichen Laserstrahlen 2a, 2b werden wahlweise die entsprechenden Motor-Spiegel-Einheiten 7a, 7b an dem Träger 3 befestigt. Durch die unterschiedlichen ersten Motor-Spiegel-Einheiten 7a,7b, insbesondere durch die unterschiedlichen Montageflansche 6a, 6b, kann somit den unterschiedlichen Strahlverläufen (also einem Strahlversatz bzw. einer veränderten Strahlgeometrie), die sich bei der Ablenkung Laserstrahlen mit unterschiedlich großem Strahldurchmesser 2a,2b ergeben, Rechnung getragen werden. Das Gehäuse **9** der Scannervorrichtung 1 ist in den Fign. 1a, 1b offen dargestellt. Es versteht sich jedoch, dass die Scannervorrichtung 1 im Laserbetrieb durch nicht dargestellte Gehäuseteile geschlossen ist.

Die **Fign. 2a** und **2b** zeigen die Scannervorrichtung 1 jeweils für den Laserstrahl mit kleinem und großen Strahldurchmesser 2a,2b in einer Unteransicht, sodass eine an dem Träger 3 gebildete Austrittsöffnung **10** für die Laserstrahlen 2a,2b ersichtlich ist. Durch einen Vergleich der Fign. 2a und 2b ist ein Strahlversatz **V** des eintretenden Laserstrahls mit großem Strahldurchmesser 2b im Vergleich zum eintretenden Laserstrahl mit kleinem Strahldurchmesser 2a erkennbar. Durch die Austrittsöffnung 10 hindurch sind jeweils der eintrittsseitige erste Spiegel **11a, 11b** sowie ein austrittsseitiger zweiter Spiegel **12a, 12b** erkennbar, die entsprechend bei der Ablenkung des Laserstrahls mit kleinem bzw. großem Strahldurchmesser 2a, 2b zusammenwirken. Entsprechend dem größeren Strahldurchmesser ist der erste Spiegel 11b größer als der erste Spiegel 11a und der zweite Spiegel 12b größer als der zweite Spiegel 12a. Die Laserstrahlen 2a, 2b treten in den Fign. 2a, 2b mittig aus der Austrittsöffnung 10 aus, werden jedoch typischerweise im Betrieb der Scannervorrichtung 1 in unterschiedlichste Richtungen verschwenkt. Hierzu ist der Austrittsöffnungsdurchmesser ausreichend groß ausgebildet.

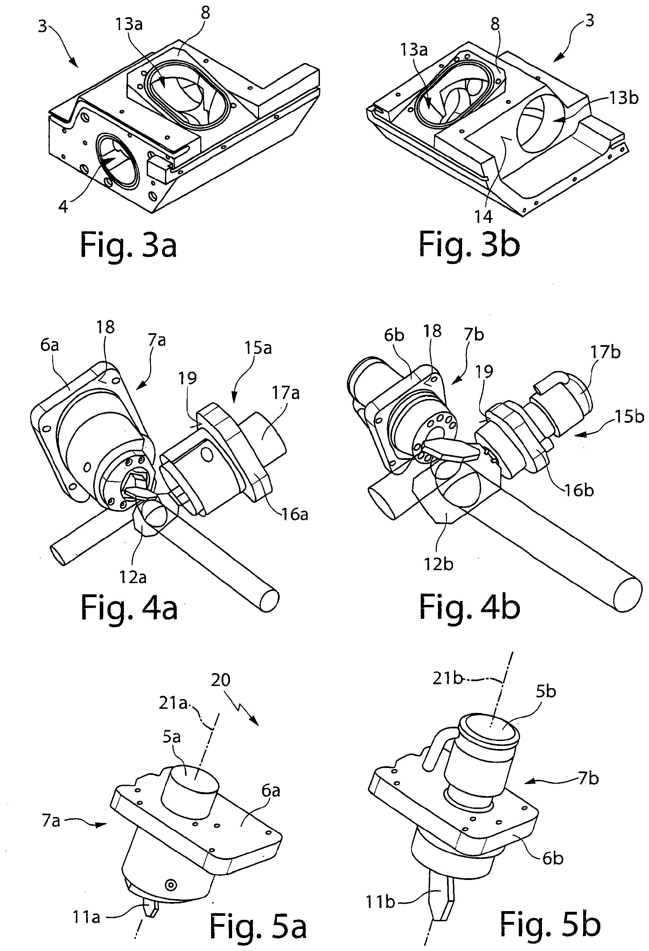

In den **Fign. 3a** und **3b** ist der Träger 3 der Scannervorrichtung 1 in zwei unterschiedlichen perspektivischen Ansichten dargestellt. An dem Träger 3 sind zum zumindest teilweisen Eingreifen der ersten Motor-Spiegel-Einheiten 7a, 7b und zweiten Motor-Spiegel-Einheiten eine erste und eine zweite Aufnahmeöffnung **13a, 13b** ausgebildet. Dabei ist der Konturverlauf der ersten Aufnahmeöffnung 13a an die unterschiedlichen Spiegelgrößen und/oder unterschiedlichen Spiegelpositionen der beiden darin wahlweise anordnenbaren Motor-Spiegel-Einheiten 7a, 7b angepasst. Hierdurch ist es möglich, dass beispielsweise ein Versatz der Spiegel mitsamt der Antriebsmotoren 5a, 5b aus der in der Fig. 1a dargestellten Position in die in der Fig. 1b dargestellte Position erfolgt. Im Bereich der ersten Aufnahmeöffnung 13a ist ferner die erste Montagefläche 8 des Trägers 3 und im Bereich der zweiten Aufnahmeöffnung 13b eine zweite Montagefläche **14** des Trägers 3 gebildet. An der ersten Montagefläche 8 sind die ersten Motor-Spiegel-Einheiten 7a, 7b wahlweise lösbar befestigbar. An dem Träger 3 ist ferner die Eintrittsöffnung 4 für die Laserstrahlen 2a,2b gebildet, deren Öffnungsquerschnitt ebenfalls an die unterschiedlichen Strahldurchmesser und/oder die unterschiedlichen Spiegelgrößen und/oder unterschiedlichen Spiegelpositionen der wahlweise anordnenbaren Motor-Spiegel-Einheiten 7a,7b angepasst ist. Der Öffnungsquerschnitt der Eintrittsöffnung 4 ist insbesondere an den erforderlichen eintrittsseitigen Versatz V (vgl. die Fign. 2a, 2b sowie die perspektivischen Ansichten der Fing. 1a, 1b) angepasst. Die Eintrittsöffnung 4 und die erste Aufnahmeöffnung 13a sind als Langlöcher ausgebildet.

In den **Fign. 4a** und **4b** sind die eintrittsseitigen ersten Motor-Spiegel-Einheiten 7a, 7b und austrittsseitige zweite Motor-Spiegel-Einheiten **15a, 15b** zur Ablenkung jeweils des Laserstrahls mit kleinem oder großem Strahldurchmesser 2a, 2b dargestellt. Die austrittsseitigen zweiten Spiegel 12a, 12b bilden jeweils zusammen mit austrittsseitigen Montageflanschen **16a, 16b** und entsprechenden austrittsseitigen Antriebsmotoren **17a, 17b** die zweiten Motor-Spiegel-Einheiten 15a, 15b, die an der in Fig. 3b gezeigten zweiten Montagefläche 14 wahlweise befestigbar sind. Die Montageflansche 6a, 6b der ersten Motor-Spiegel-Einheiten 7a, 7b weisen jeweils identische Anlageflächen **18** auf und sind mit den Anlageflächen 18 an der in den Fign. 3a und 3b dargestellten ersten Montagefläche 8 lösbar befestigbar. Entsprechend weisen die Montageflansche 16a, 16b der zweiten Motor-Spiegel-Einheiten 15a, 15b ebenfalls jeweils identische Anlageflächen **19** zur Befestigung an der zweiten Montagefläche 14 des Trägers 3 auf.

**Fig. 5** zeigt einen Satz **20** an mehreren, hier zwei eintrittsseitigen ersten Motor-Spiegel-Einheiten 7a, 7b aus denen je nach Strahldurchmesser eine andere Motor-Spiegel-Einheit 7a, 7b zur Befestigung am Träger ausgewählt wird. Die eine erste Motor-Spiegel-Einheit 7a weist den einen kleinen ersten Spiegel 11a, den dünnen (ersten) Montageflansch 6a mit in einer ersten Position angeordnetem kleinen (ersten) Antriebsmotor 5a auf und die andere erste Motor-Spiegel-Einheit 7b weist den großen ersten Spiegel 11b, den dickeren (zweiten) Montageflansch 6b mit in einer anderen Position angeordnetem größeren (zweiten) Antriebsmotor 5b auf. Die beiden Motor-Spiegel-Einheiten 7a, 7b unterscheiden sich folglich bezüglich der Spiegelgröße und/oder Spiegelposition voneinander. Die einzelnen ersten Spiegel 11a, 11b sind jeweils um Achsen **21a, 21b** schwenkbar gelagert und motorisch angetrieben.

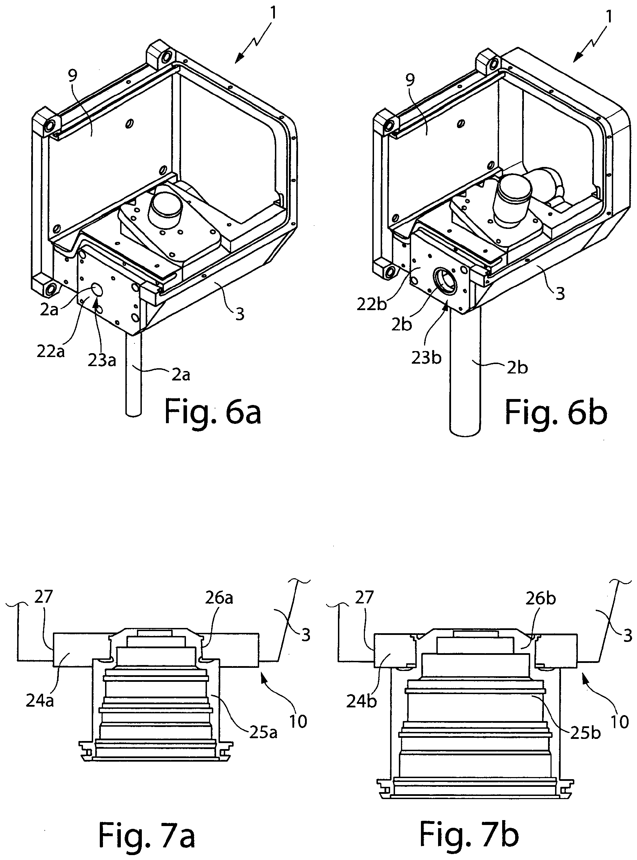

Die **Fign. 6a** und **6b** zeigen die Scannervorrichtung 1, wobei die Eintrittsöffnung 4 des Trägers 3 durch unterschiedliche Lochplatten **22a, 22b** (zumindest teilweise) abgedeckt ist. Die Lochöffnungen **23a, 23b,** durch die die Laserstrahlen mit unterschiedlichen Strahldurchmessern 2a, 2b hindurchtreten, unterscheiden sich sowohl im Durchmesser als auch in ihrer Position relativ zu den Lochplatten 22a, 22b. Die eintretenden Laserstrahlen 2a, 2b treten von einem Außenbereich der Scannervorrichtung zunächst durch die entsprechenden Lochöffnungen 23a, 23b und dann durch die Eintrittsöffnung 4 in das Innere des Trägers 3 bzw. in das Innere des Gehäuses 9 der Scannervorrichtung 1 ein. In den Fign. 6a, 6b bildet der Träger 3 teilweise das Gehäuse 9 der Scannervorrichtung 1 bzw. der Träger 3 ist Teil des Gehäuses 9.

In den **Fign. 7a** und **7b** sind schließlich unterschiedliche als Gewindeeinsätze **24a, 24b** ausgebildete Halteeinrichtungen dargestellt, über die jeweils unterschiedliche Scannerobjektive **25a, 25b** (zum Beispiel F-/Theta-Objektive) bzw. deren austrittsseitige optische Linsen in einem unterschiedlichen Abstand zu dem Träger 3, insbesondere zu den Spiegeln 11,12 der Scannervorrichtung 1, positioniert werden können. In den Fign. 7a, 7b ist der Träger 3 lediglich ausschnittsweise dargestellt. Der Gewindeeinsatz 24a für das kleine Scannerobjektiv 25a bzw. für den Laserstrahl mit kleinem Strahldurchmesser 2a weist ein kleines Innengewinde **26a** bzw. einen kleinen Innendurchmesser auf, wohingegen der Gewindeeinsatz 24b für das größere Scannerobjektiv 25b bzw. für den Laserstrahl mit großem Strahldurchmesser 2b ein großes Innengewinde **26b** bzw. einen großen Innendurchmesser aufweist. Beide Gewindeeinsätze 25a, 25b weisen jedoch zur Befestigung an dem Träger 3 bzw. an der Austrittsöffnung 10 des Trägers 3 ein gleich großes Außengewinde **27** auf.

## Patentansprüche

1. Scannervorrichtung (1) zum 2-dimensionalen Ablenken wahlweise mindestens eines ersten und eines zweiten Laserstrahls (2a, 2b), die unterschiedliche Strahldurchmesser und beim Eintritt in die Scannervorrichtung (1) einen Strahlversatz (v) aufweisen, mittels zweier jeweils um eine Achse (21a, 21b) schwenkbar gelagerter, motorisch angetriebener Spiegel (11a, 11b, 12a, 12b),
mit mindestens zwei jeweils einen Montageflansch (6a,6b) aufweisenden ersten Motor-Spiegel-Einheiten (7a,7b), die jeweils einen ersten Spiegel (11a,11b) samt Antriebsmotor (5a,5b) sowie jeweils identische Anlageflächen (18) aufweisen und die sich zumindest bezüglich der Spiegelposition voneinander unterscheiden, und
mit einem Träger (3) zur Befestigung wahlweise einer der mindestens zwei ersten Motor-Spiegel-Einheiten (7a,7b), die jeweils mit ihren Anlageflächen (18) an der gleichen ersten Montagefläche (8) des Trägers (3) lösbar befestigbar sind.

2. Scannervorrichtung nach Anspruch 1, **dadurch gekennzeichnet, dass** eine den anderen, zweiten Spiegel (12a, 12b) samt Antriebsmotor (17a,17b) aufweisende zweite Motor-Spiegel-Einheit (15a,15b) zur Befestigung am Träger (3) einen Montageflansch (16a, 16b) aufweist, der mit einer Anlagefläche (19) an einer zweiten Montagefläche (14) des Trägers (3) lösbar befestigbar ist.

3. Scannervorrichtung nach Anspruch 2, **gekennzeichnet durch** mindestens zwei jeweils einen Montageflansch (16a, 16b) aufweisende zweite Motor-Spiegel-Einheiten (15a, 15b), die jeweils identische Anlageflächen (19) aufweisen und sich bezüglich der Spiegelgröße und/oder Spiegelposition voneinander unterscheiden und die wahlweise an der gleichen zweiten Montagefläche (14) des Trägers (3) lösbar befestigbar sind.

4. Scannervorrichtung nach einem der vorhergehenden Ansprüche, **dadurch gekennzeichnet, dass** der Träger (3) eine Wand mit einer Aufnahmeöffnung (13a, 13b) zum zumindest teilweisen Eingreifen der Motor-Spiegel-Einheiten (7a,7b,15a,15b) in den Träger (3) aufweist.

5. Scannervorrichtung nach Anspruch 4, **dadurch gekennzeichnet, dass** der Konturverlauf der Aufnahmeöffnung (13a, 13b) an die unterschiedlichen Spiegelgrößen und/oder unterschiedlichen Spiegelpositionen von mehreren wahlweise anordnenbaren Motor-Spiegel-Einheiten (7a,7b,15a,15b) angepasst ist.

6. Scannervorrichtung nach einem der vorhergehenden Ansprüche, **dadurch gekennzeichnet, dass** der Träger (3) eine Eintrittsöffnung (4) für den Eingangslaserstrahl (2a,2b) aufweist, deren Öffnungsquerschnitt an die unterschiedlichen Spiegelgrößen und/oder unterschiedlichen Spiegelpositionen von mehreren wahlweise anordnenbaren Motor-Spiegel-Einheiten (7a,7b) angepasst ist.

7. Scannervorrichtung nach einem der Ansprüche 4 bis 6, **dadurch gekennzeichnet, dass** die Aufnahmeöffnung (13a, 13b) und/oder die Eintrittsöffnung (4) jeweils als Langloch ausgebildet sind.

8. Scannervorrichtung nach einem der vorhergehenden Ansprüche, **dadurch gekennzeichnet, dass** der Träger (3), insbesondere die Eintrittsöffnung (4), mit unterschiedlichen Lochplatten (22a,22b) zumindest teilweise abdeckbar ist, deren Lochöffnungen (23a,23b) sich im Durchmesser und/oder in der relativen Position unterscheiden.

9. Scannervorrichtung nach einem der vorhergehenden Ansprüche, **dadurch gekennzeichnet, dass** der Träger (3) zumindest teilweise ein Gehäuse (9) der Scannervorrichtung (1) bildet.

10. Scannervorrichtung nach einem der vorhergehenden Ansprüche, **dadurch gekennzeichnet, dass** an dem Träger (3) unterschiedliche Halteeinrichtungen (24a,24b) befestigbar sind, die ein Scannerobjektiv (25a,25b) jeweils in einem unterschiedlichen Abstand zu dem Träger (3), insbesondere zu einem Spiegel (11a, 11b, 12a, 12b) der Scannervorrichtung (1), positionieren.

11. Scannervorrichtung nach einem der vorhergehenden Ansprüche, **dadurch gekennzeichnet, dass** sich die mindestens zwei ersten Motor-Spiegel-Einheiten (7a, 7b) bezüglich der Spiegelgröße voneinander unterscheiden.

12. Satz (20) aus einer Mehrzahl an Motor-Spiegel-Einheiten (7a,7b,15a,15b) für eine Scannervorrichtung nach einem der vorhergehenden Ansprüche, wobei die Motor-Spiegel-Einheiten (7a,7b,15a,15b) jeweils einen Spiegel (11a,11b,12a,12b) samt Antriebsmotor (5a,5b,17a,17b) und unterschiedliche Montageflansche (6a,6b,16a,16b) mit jeweils identischen Anlageflächen (18,19) aufweisen, wobei sich die einzelnen Motor-Spiegel-Einheiten (7a,7b,15a,15b) zumindest bezüglich der Spiegelposition voneinander unterscheiden.

13. Satz nach Anspruch 12, **dadurch gekennzeichnet, dass** sich die Motor-Spiegel-Einheiten (7a, 7b, 15a, 15b) bezüglich der Spiegelgröße voneinander unterscheiden.

## Claims

1. Scanner device (1) for 2-dimensional deflection of selectively at least one first and one second laser beam (2a, 2b), which have different beam diameters and, upon entry into the scanner device (1), have a beam offset (v), by means of two mirrors (11a, 11b, 12a, 12b) which are each pivotably supported about an axis (21a, 21b) and which are driven by a motor, comprising at least two first motor/mirror units (7a, 7b) which each have a mounting flange (6a, 6b) and each have a first mirror (11a, 11b) including drive motor (5a, 5b) and also each have identical abutment faces (18) and which differ from each other at least with respect to the mirror position, and
a carrier (3) for selectively securing one of the at least two first motor/mirror units (7a, 7b), the abutment faces (18) of which can each be releasably secured to the same first mounting surface (8) of the carrier (3).

2. Scanner device according to claim 1, **characterised in that** a second motor/mirror unit (15a, 15b) which has the other second mirror (12a, 12b) including drive motor (17a, 17b) has, for securing to the carrier (3), an assembly flange (16a, 16b) which can be releasably secured with an abutment face (19) to a second assembly face (14) of the carrier (3).

3. Scanner device according to claim 2, **characterised by** at least two second motor/mirror units (15a, 15b) which each have an assembly flange (16a, 16b) and which each have identical abutment faces (19) and which differ from each other with respect to the mirror size and/or mirror position and which can be selectively releasably secured to the same second assembly face (14) of the carrier (3).

4. Scanner device according to any one of the preceding claims, **characterised in that** the carrier (3) comprises a wall having a receiving opening (13a, 13b) for at least partially engaging the motor/mirror units (7a, 7b, 15a, 15b) in the carrier (3).

5. Scanner device according to claim 4, **characterised in that** the contour path of the receiving opening (13a, 13b) is adapted to the different mirror sizes and/or different mirror positions of a plurality of motor/mirror units (7a, 7b, 15a, 15b) which can be selectively arranged.

6. Scanner device according to any one of the preceding claims, **characterised in that** the carrier (3) has for the input laser beam (2a, 2b) an inlet opening (4) whose opening cross-section is adapted to the different mirror sizes and/or different mirror positions of a plurality of motor/mirror units (7a, 7b) which can be selectively arranged.

7. Scanner device according to any one of claims 4 to 6, **characterised in that** the receiving opening (13a, 13b) and/or the inlet opening (4) are each constructed as an elongate hole.

8. Scanner device according to any one of the preceding claims, **characterised in that** the carrier (3), in particular the inlet opening (4), can be at least partially covered with different perforated plates (22a, 22b) whose hole openings (23a, 23b) differ in terms of diameter and/or in terms of the relative position.

9. Scanner device according to any one of the preceding claims, **characterised in that** the carrier (3) forms at least partially a housing (9) of the scanner device (1).

10. Scanner device according to any one of the preceding claims, **characterised in that** there can be secured to the carrier (3) different retention devices (24a, 24b) which position a scanner objective lens (25a, 25b) in each case with a different spacing with respect to the carrier (3), in particular with respect to a mirror (11a, 11b, 12a, 12b) of the scanner device (1).

11. Scanner device according to any one of the preceding claims, **characterized in that** the at least two first motor/mirror units (7a, 7b) differ from each other with respect to the mirror size.

12. Set (20) comprising a plurality of motor/mirror units (7a, 7b, 15a, 15b) for a scanner device according to any one of the preceding claims, wherein the motor/mirror units (7a, 7b, 15a, 15b) each have a mirror (11a, 11b, 12a, 12b) including drive motor (5a, 5b, 17a, 17b) and different assembly flanges (6a, 6b, 16a, 16b) each having identical abutment faces (18, 19), wherein the individual motor/mirror units (7a, 7b, 15a, 15b) differ from each other at least with respect to the mirror position.

13. Set according to claim 12, **characterized in that** the motor/mirror units (7a, 7b, 15a, 15b) differ from one another with respect to the mirror size.

## Revendications

1. Dispositif de balayage (1) pour dévier dans deux dimensions sélectivement au moins un premier et un deuxième faisceau laser (2a, 2b) qui présentent des diamètres de faisceau différents et un décalage de faisceau (v) à l'entrée dans le dispositif de balayage (1), au moyen de deux miroirs motorisés (11a, 11b, 12a, 12b) qui sont chacun montés pivotants autour d'un axe (21a, 21b),
comportant au moins deux premières unités à miroir motorisé (7a, 7b) présentant chacune une bride de montage (6a, 6b), qui présentent chacune un premier miroir (11a, 11b) avec moteur d'entraînement (5a, 5b) ainsi que des surfaces d'appui (18) identiques et qui diffèrent l'une de l'autre au moins par la position du miroir, et
comportant un support (3) pour fixer sélectivement l'une desdites au moins deux premières unités à miroir motorisé (7a, 7b) qui peuvent être fixées de manière amovible, chacune par leurs surfaces d'appui (18), à la même première surface de montage (8) du support (3).

2. Dispositif de balayage selon la revendication 1, **caractérisé en ce qu'**une deuxième unité à miroir motorisé (15a, 15b) présentant l'autre, deuxième miroir (12a, 12b) avec moteur d'entraînement (17a, 17b) présente, pour la fixation au support (3), une bride de montage (16a, 16b) qui peut être fixée de manière amovible par une surface d'appui (19) à une deuxième surface de montage (14) du support (3).

3. Dispositif de balayage selon la revendication 2, **caractérisé par** au moins deux deuxièmes unités à miroir motorisé (15a, 15b) présentant chacune une bride de montage (16a, 16b), qui présentent chaque fois des surfaces d'appui (19) identiques et diffèrent l'une de l'autre par la taille du miroir et/ou la position du miroir et qui peuvent être sélectivement fixées de manière amovible à la même deuxième surface de montage (14) du support (3).

4. Dispositif de balayage selon l'une des revendications précédentes, **caractérisé en ce que** le support (3) présente une paroi avec une ouverture de réception (13a, 13b) pour l'engagement au moins partiel des unités à miroir motorisé (7a, 7b, 15a, 15b) dans le support (3).

5. Dispositif de balayage selon la revendication 4, **caractérisé en ce que** le contour de l'ouverture de réception (13a, 13b) est adapté aux différentes tailles de miroir et/ou aux différentes positions de miroir de plusieurs unités à miroir motorisé (7a, 7b, 15a, 15b) pouvant être disposées sélectivement.

6. Dispositif de balayage selon l'une des revendications précédentes, **caractérisé en ce que** le support (3) présente une ouverture d'entrée (4) pour le faisceau laser d'entrée (2a, 2b), dont la section d'ouverture est adaptée aux différentes tailles de miroir et/ou aux différentes positions de miroir de plusieurs unités à miroir motorisé (7a, 7b) pouvant être disposées sélectivement.

7. Dispositif de balayage selon l'une des revendications 4 à 6, **caractérisé en ce que** l'ouverture de réception (13a, 13b) et/ou l'ouverture d'entrée (4) sont réalisées chacune sous la forme d'un trou oblong.

8. Dispositif de balayage selon l'une des revendications précédentes, **caractérisé en ce que** le support (3), en particulier l'ouverture d'entrée (4), peut être recouvert au moins partiellement de différentes plaques perforées (22a, 22b), dont les ouvertures perforées (23a, 23b) diffèrent par le diamètre et/ou par la position relative.

9. Dispositif de balayage selon l'une des revendications précédentes, **caractérisé en ce que** le support (3) forme au moins partiellement un boîtier (9) du dispositif de balayage (1).

10. Dispositif de balayage selon l'une des revendications précédentes, **caractérisé en ce que** différents moyens de maintien (24a, 24b), qui positionnent chacun un objectif de balayage (25a, 25b) à une distance différente du support (3), en particulier d'un miroir (11a, 11b, 12a, 12b) du dispositif de balayage (1), peuvent être fixés au support (3).

11. Dispositif de balayage selon l'une des revendications précédentes, **caractérisé en ce que** lesdites au moins deux premières unités à miroir motorisé (7a, 7b) diffèrent l'une de l'autre par la taille du miroir.

12. Ensemble (20) formé d'une pluralité d'unités à miroir motorisé (7a, 7b, 15a, 15b) pour un dispositif de balayage selon l'une des revendications précédentes, les unités à miroir motorisé (7a, 7b, 15a, 15b) présentant chacune un miroir (11a, 11b, 12a, 12b) avec moteur d'entraînement (5a, 5b, 17a, 17b) et des brides de montage différentes (6a, 6b, 16a, 16b) avec chaque fois des surfaces d'appui identiques (18, 19), les différentes unités à miroir motorisé (7a, 7b, 15a, 15b) différant les unes des autres au moins par la position du miroir.

13. Ensemble selon la revendication 12, **caractérisé en ce que** les unités à miroir motorisé (7a, 7b, 15a, 15b) diffèrent les unes des autres par la taille du miroir.
